# EUROPEAN PATENT APPLICATION

(11) **EP 3 276 609 A1**
(43) Date of publication of application: **31.01.2018**
(21) Application number: 17166185.3
(22) Date of filing: 12.04.2017
(51) Int. Cl.: G09G 5/00, G09G 5/36, H05K 1/14, H04N 5/64

(54) **DISPLAY DEVICE AND MAINBOARD APPLIED IN THE DISPLAY DEVICE**

(30) Priority: 26.07.2016 WO PCT/CN2016/091703
(71) Applicant: Beijing Xiaomi Mobile Software Co., Ltd., Beijing 100085 (CN)
(72) Inventor: LIANG, Xin, Beijing, Beijing 100085 (CN); YAN, Xing, Beijing, Beijing 100085 (CN); SHI, Yingguan, Beijing, Beijing 100085 (CN); LI, Jianhua, Beijing, Beijing 100085 (CN); FEI, Yukun, Beijing, Beijing 100085 (CN)
(74) Representative: dompatent von Kreisler Selting Werner - Partnerschaft von Patent- und Rechtsanwälten mbB

(57) **Abstract**

The present disclosure relates to a display device and a mainboard applied in the display device, which belong to the field of display technology. The display device may include: a mainboard (31), a display panel (32), an adaptation circuit (33) and a connecting line (34). The mainboard (31) includes a processing circuit (311), a signal transmission interface (312) and a signal conversion interface (313). The signal conversion interface (313) includes a first interface (313a) and a second interface (313b). The adaptation circuit (33) is electrically connected to the signal conversion interface (313), the first interface (313a) is electrically connected to the processing circuit (311) of the mainboard (31) and the second interface (313b) is electrically connected to the signal transmission interface (312) of the mainboard (31). The signal transmission interface (312) of the mainboard (31) is electrically connected to the signal transmission interface (321) of the display panel (32) via the connecting line (34).

## Description

### TECHNICAL FIELD

The present disclosure relates to the field of display technology, and more particularly to a display device and a mainboard applied in the display device.

### BACKGROUND

In the production of televisions, manufacturers will release various different types of televisions to satisfy the requirements of different consumers, for example, using different sizes, appearances, display panels, etc. From the perspective of large-scale production, if there are many types of televisions, reducing the number of types of mainboards with the highest circuit complexity as much as possible will help to enhance the efficiency of production, sales, after-sales and maintenance services, and also the quality control.

However, it is very difficult to use a uniform type of mainboards for televisions using different display panels. As for display panels produced by various panel manufacturers, although connecting lines between signal transmission interfaces of the display panels and signal transmission interfaces of the mainboards are standard, signal properties such as line order definition, control interface, signal level polarity and the like are not unified, and the various panel manufacturers may not be willing to unify these signal properties considering their own benefits. Developing a specific mainboard separately for each type of display panels may increase the development cost significantly. Also, it is hard to produce these mainboards in a same production line, which brings negative effects on production process control, inventory management, spare-parts management and maintenance, etc.

### SUMMARY

A display device and a mainboard applied in the display device are provided in embodiments of the present disclosure. The technical solutions are as follows:

According to a first aspect of embodiments of the present disclosure, a display device is provided. The device may include a mainboard, a display panel, an adaptation circuit and a connecting line. The mainboard may include a processing circuit, a signal transmission interface and a signal conversion interface, wherein the signal conversion interface includes a first interface and a second interface. The adaptation circuit is electrically connected to the signal conversion interface, the first interface is electrically connected to the processing circuit of the mainboard and the second interface is electrically connected to the signal transmission interface of the mainboard. The signal transmission interface of the mainboard is electrically connected to the signal transmission interface of the display panel via the connecting line.

Alternatively, the processing circuit of the mainboard is electrically connected to the first interface via a first signal line, and the second interface is electrically connected to the signal transmission interface of the mainboard via a second signal line.

Alternatively, the signal transmission interface of the mainboard may include a high-speed signal transmission interface and a low-speed signal transmission interface. The processing circuit of the mainboard is electrically connected to the high-speed signal transmission interface via a high-speed signal line. The processing circuit of the mainboard is electrically connected to the first interface via a first low-speed signal line, and the second interface is electrically connected to the low-speed signal transmission interface via a second low-speed signal line.

Alternatively, the high-speed signal line is configured to transmit high-speed signals, and the first low-speed signal line and the second low-speed signal line are configured to transmit low-speed signals.

Alternatively, the high-speed signals are video signals, and the low-speed signals are other signals than the video signals.

Alternatively, the adaptation circuit further includes a first predefined interface and/or a second predefined interface. The first predefined interface is configured to provide information associated with the display panel to the mainboard. The second predefined interface is configured to provide a predefined control signal to the main board.

Alternatively, the adaptation circuit may further include a power conversion circuit.

Alternatively, the adaptation circuit is connected to the display panel by a predetermined manner.

Alternatively, the adaptation circuit is plugged onto the signal conversion interface of the mainboard via a connector.

According to a second aspect of embodiments of the present disclosure, a mainboard applied in a display device is provided. The mainboard may include a processing circuit, a signal transmission interface and a signal conversion interface, wherein the signal conversion interface may include a first interface and a second interface.

Alternatively, the processing circuit of the mainboard is electrically connected to the first interface via a first signal line, and the second interface is electrically connected to the signal transmission interface of the mainboard via a second signal line.

Alternatively, the signal transmission interface of the mainboard includes a high-speed signal transmission interface and a low-speed signal transmission interface. The processing circuit of the mainboard is electrically connected to the high-speed signal transmission interface via a high-speed signal line. The processing circuit of the mainboard is electrically connected to the first interface via a first low-speed signal line, and the second interface is electrically connected to the low-speed signal transmission interface via a second low-speed signal line.

Alternatively, the high-speed signal line is configured to transmit high-speed signals, and the first low-speed signal line and the second low-speed signal line are configured to transmit low-speed signals.

Alternatively, the high-speed signals are video signals, and the low-speed signals are other signals than the video signals.

The technical solutions provided by embodiments of the present disclosure may include the following beneficial effects:

By additionally providing the signal conversion interface on the mainboard and making the adaptation circuit be electrically connected to the signal conversion interface, signals to be transmitted to the display panel may be converted by the adaptation circuit and then transmitted to the display panel via the signal transmission interface of the mainboard, or signals received from the display panel may be converted by the adaptation circuit and then transmitted to the processing circuit of the mainboard. Therefore, a single mainboard may adapt to various panels, and meanwhile it is unnecessary to provide an additional fixing position to fix an adapter board, only a set of connecting lines may be needed to connect the mainboard and the display panel, and thus the cost may be lower.

It is to be understood that both the forgoing general descriptions and the following detailed descriptions are exemplary and explanatory only, and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig.1 illustrates a schematic diagram of a standard connection relation between a mainboard and a display panel;
Fig.2 illustrates a schematic diagram of a connection relation between a mainboard and a display panel in the related technology;
Fig. 3A is a structure schematic diagram of a display device according to an exemplary embodiment;
Fig. 3B is a structure schematic diagram of a display device according to an exemplary embodiment;
Fig. 4A is a structure schematic diagram of a mainboard according to an exemplary embodiment;
Fig. 4B is a structure schematic diagram of a mainboard according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present disclosure. Instead, they are merely examples of device and methods consistent with aspects related to the present disclosure as recited in the appended claims.

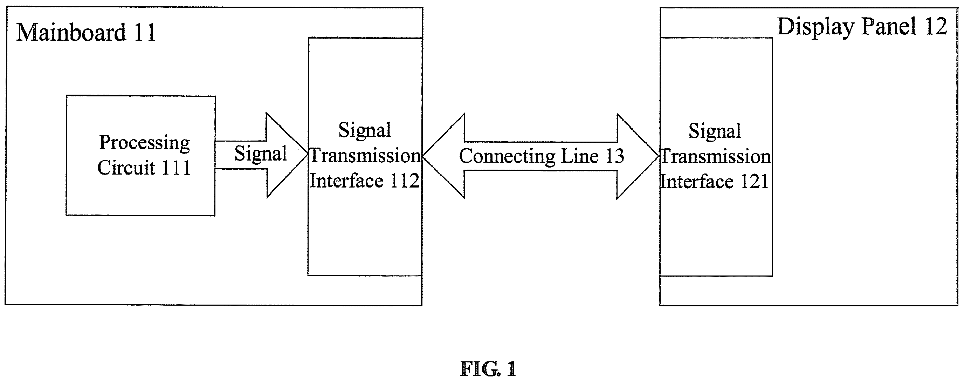

Fig.1 illustrates a schematic diagram of a standard connection relation between a mainboard and a display panel. As shown in Fig. 1, the display device may include a mainboard 11, a display panel 12 and a connecting line 13.

The mainboard 11 may be a core of the display device and used to implement various functions of the display device, such as signal processing, image processing, sound processing, etc. The structure, circuits and components of the mainboard 11 may determine the functions that may be implemented by the mainboard 11. The mainboard 11 may include a processing circuit 111 and a signal transmission interface 112. The processing circuit 111 may be a core processing component of the mainboard 11. For example, the processing circuit 111 may be the Central Processing Unit ("CPU") of the mainboard 11, which may be used to implement various functions of the display device.

In an example, taking a television as an example of the display device, the processing circuit of the mainboard of the television may include a power adaptation circuit, a driver board, a high voltage board and a television ("TV") board. The power adaptation circuit may be used to provide power by converting the commercial power into the working voltage of the television. The driver board may be used to drive the display panel to display signals. The driver board may mainly include a panel control circuit, a luminance control circuit, DC-DC conversion circuit, Transistor-Transistor Logic ("TTL") level signal transmission circuit, etc. The high voltage board may be used to boost the working voltage of the television to turn on the backlight of the display panel. The TV board may be used to receive, demodulate and decode a television signal.

The processing circuit 111 may be electrically connected to the signal transmission interface 112 via a signal line, and transmit signals to the display panel 12 via the signal transmission interface 112. The signals transmitted to the display panel 12 by the processing circuit 111 may be classified as high-speed signals and low-speed signals based on signal frequency. In an example, the high-speed signals may be video signals, including but not limited to V-by-one signals, Low Voltage Differential Signaling ("LVDS"), etc; and the low-speed signals may be other signals than the video signals, including but not limited to power signals, control signals, state signals, etc.

The signal transmission interface 112 of the mainboard 11 may be electrically connected to the signal transmission interface 121 of the display panel 12 via the connecting line 13. Alternatively, the signal transmission interface 112 of the mainboard 11 and the signal transmission interface 121 of the display panel 12 may be Timing Control ("TCON") interfaces. Both of the signal transmission interfaces may be connected via a standard connecting line.

As discussed above, as for display panels produced by various panel manufacturers, although connecting lines between their signal transmission interfaces and the signal transmission interfaces of the mainboard may be standard, signal properties including line order definition, control interface and signal level polarity and the like may be not unified.

To adapt to various different display panels, a solution provided in related technologies is to make compatible design on the mainboard, for example, making the mainboard adapt to different panels by resistance jumpers. In this way, although only a single type of mainboards needs to be designed, it makes no much sense to stages of actual production, inventory management, spare-part management, maintenance and the like. For these stages, the mainboards may still be considered as completely different and non-interchangeable mainboards. Moreover, if there are a large number of display panels to be adapted to, the design of resistance jumpers will be very complex. Thus, this solution may only be suitable to adapt to a few display panels with predetermined models, and may not be able to adapt to new display panels that may be introduced later.

Another solution provided in related technologies is to add an adapter board between the mainboard and the display panel. The adapter board may be customized for signal transmission interfaces of various different display panels and used to convert signal properties such as line order definition, control interface and signal level polarity and the like, so as to realize the standardization of the mainboard.

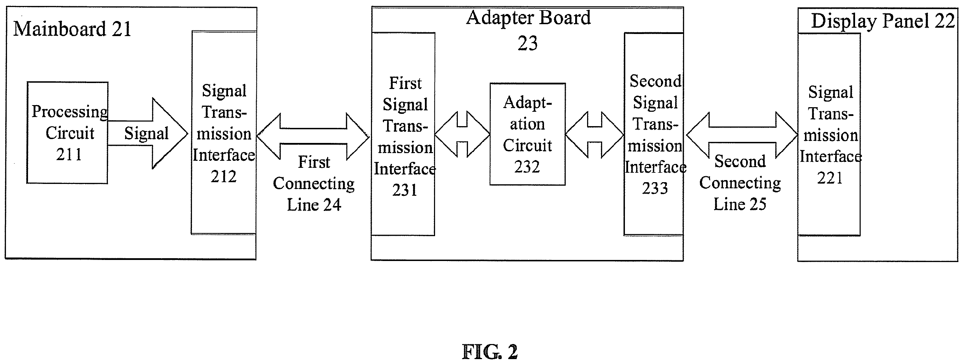

Reference will be made to Fig. 2 which illustrates a schematic diagram of the connection relation between the mainboard and the display panel according to the above solution. The display device may include a mainboard 21, a display panel 22, an adapter board 23, a first connecting line 24 and a second connecting line 25. The mainboard 21 may include a processing circuit 211 and a signal transmission interface 212. The processing circuit 211 may be electrically connected to the signal transmission interface 212 via a signal line, and transmit the signal to the adapter board 23 via the signal transmission interface 212. The adapter board 23 may include a first signal transmission interface 231, an adaptation circuit 232 and a second signal transmission interface 233. The signal transmission interface 212 of the mainboard 21 may be electrically connected to the first signal transmission interface 231 of the adapter board 23 via the first connection line 24. The adaptation circuit 232 may be electrically connected to the first signal transmission interface 231 and the second signal transmission interface 233 respectively. The adaptation circuit 232 may be used to convert signal properties such as line order definition, control interface and signal level polarity, etc. For example, the mainboard 21 may support a signal with a first signal property and the display panel 22 may support a signal with a second signal property. In this case, the adaptation circuit 232 may convert the signal with the first signal property acquired from the mainboard 21 into the signal with the second signal property, and then transmit the signal with the second signal property to the display panel 22. The second signal transmission interface 233 of the adapter board 23 may be electrically connected to the signal transmission interface 221 of the display panel 22 via the second connecting line 25. The signal transmission interface 212 of the mainboard 21, the first signal transmission interface 231 of the adapter board 23, the second signal transmission interface 233 of the adapter board 23 and the signal transmission interface 221 of the display panel 22 may be TCON interfaces.

In the above described solution, it may be needed to additionally provide a fixing position to fix the adapter board on the display panel, and two groups of connecting lines may be necessary. Moreover, for high-speed signals such as video signals, when the signals go through the adapter board, at least impedance discontinuous points may be introduced, which will impact signal quality and reliability of signal transmission, and may even result in incorrect display. Meanwhile, the Electromagnetic Interference ("EMI") property may worsen.

The solution provided in the present disclosure may not only keep a single mainboard to adapt to various panels, but also avoid impairing signal quality of the high-speed signals. Moreover, it is not needed to provide an additional fixing position to fix an adapter board, and thus the cost may be lower. In the following, the solution provided in the present disclosure will be introduced and illustrated by several embodiments.

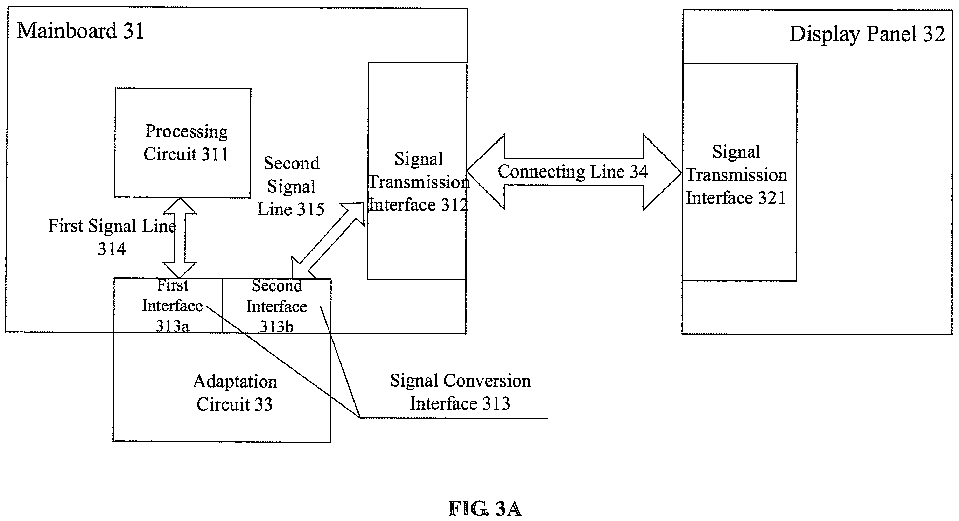

Fig. 3A is a structure schematic diagram of a display device according to an exemplary embodiment. As shown in Fig. 3A, the display device may include a mainboard 31, a display panel 32, an adaptation circuit 33 and a connecting line 34.

The mainboard 31 may include a processing circuit 311, a signal transmission interface 312 and a signal conversion interface 313. The signal conversion interface 313 may include a first interface 313a and a second interface 313b.

The adaptation circuit 33 may be electrically connected to the signal conversion interface 313. The first interface 313a may be electrically connected to the processing circuit 311 of the mainboard 31, and the second interface 313b may be electrically connected to the signal transmission interface 312 of the mainboard 31.

The signal transmission interface 312 of the mainboard 31 may be electrically connected to the signal transmission interface 321 of the display panel 32 via the connecting line 34.

In an example, as shown in Fig. 3A, the processing circuit 311 of the mainboard 31 may be electrically connected to the first interface 313a via the first signal line 314, and the second interface 313b may be electrically connected to the signal transmission interface 312 of the mainboard 31 via the second signal line 315.

In the present embodiment, by adding the signal conversion interface 313 on the mainboard 31, the adaptation circuit 33 can be electrically connected to the mainboard 31 via the signal conversion interface 313 so as to make the signal transmission with the mainboard 31. The adaptation circuit 33 may be used to convert signal properties such as line order definition, control interface and signal level polarity, etc.

It is assumed that the mainboard 31 supports a signal with a first signal property and the display panel 32 supports a signal with a second signal property. In this case, the process that the mainboard 31 transmits a signal to the display panel 32 may be as follows: the processing circuit 311 transmits a signal with the first signal property to the adaptation circuit 33 via the first signal line 314 and the first interface 313a; the adaptation circuit 33 converts the signal with the first signal property into a signal with the second signal property; the adaptation circuit 33 transmits the signal with the second signal property to the signal transmission interface 312 of the mainboard 31 via the second interface 313b and the second signal line 315; the signal transmission interface 312 of the mainboard 31 transmits the signal with the second signal property to the display panel 32 via the connecting line 34 and the signal transmission interface 321 of the display panel 32. The process that the display panel 32 transmits a signal to the mainboard 31 may be as follows: the display panel 32 transmits a signal with the second signal property to the signal transmission interface 312 of the mainboard 31 via the signal transmission interface 321 and the connecting line 34; the signal transmission interface 312 of the mainboard 31 transmits the signal with the second signal property to the adaptation circuit 33 via the second signal line 315 and the second interface 313b; the adaptation circuit 33 converts the signal with the second signal property into a signal with the first signal property; the adaptation circuit 33 transmits the signal with the first signal property to the processing circuit 311 via the first interface 313a and the first signal line 314.

As described above, in the display device provided in the present embodiment, by additionally providing the signal conversion interface on the mainboard and making the adaptation circuit be electrically connected to the signal conversion interface, signals to be transmitted to the display panel may be converted by the adaptation circuit and then transmitted to the display panel via the signal transmission interface of the mainboard, or signals received from the display panel may be converted by the adaptation circuit and then transmitted to the processing circuit of the mainboard. Therefore, a single mainboard may adapt to various panels, and meanwhile it is unnecessary to provide an additional fixing position to fix an adapter board, only a set of connecting lines may be needed to connect the mainboard and the display panel, and thus the cost may be lower.

It should be noted that, in embodiments of the present disclosure, the signal conversion interface may include the following two possible implementations. In a possible implementation, the first interface and the second interface included in the signal conversion interface may be two logically separate interfaces, and the signal conversion interface may actually be a single hardware interface rather than including two different hardware interfaces. In another possible implementation, the first interface and the second interface included in the signal conversion interface may be two physically separate interfaces, i.e., the first interface and the second interface may be two different hardware interfaces respectively, and the signal conversion interface may include the two different hardware interfaces.

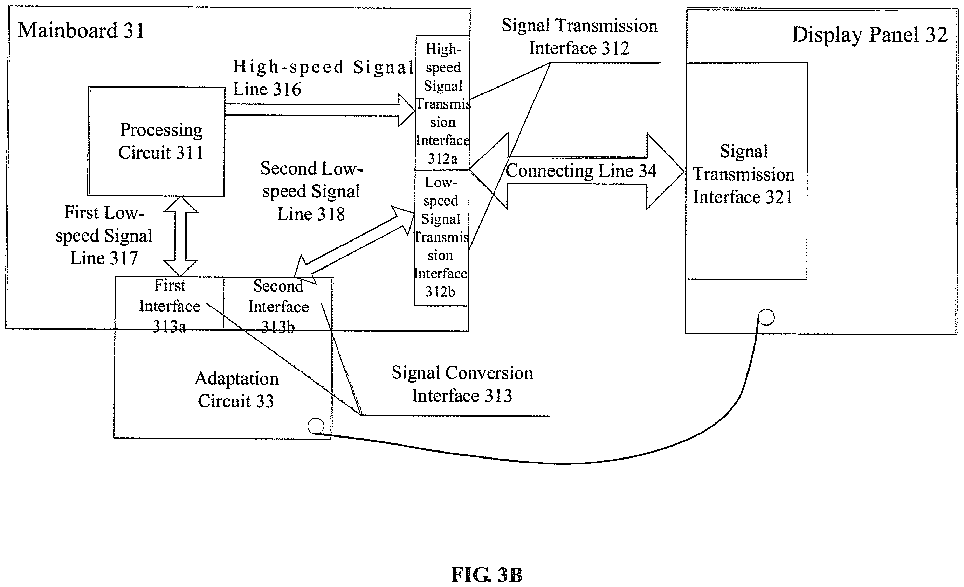

Fig. 3B is a structure schematic diagram of a display device according to an exemplary embodiment. As shown in Fig. 3B, the display device may include a mainboard 31, a display panel 32, an adaptation circuit 33 and a connecting line 34.

The mainboard 31 may be a core of the display device and used to implement various functions of the display device, such as signal processing, image processing, sound processing, etc. The structure, circuits and components of the mainboard 31 may determine the functions that may be implemented by the mainboard 31. In the present embodiment, the mainboard 31 may include a processing circuit 311, a signal transmission interface 312 and a signal conversion interface 313. The processing circuit 311 may be a core processing component of the mainboard 31. For example, the processing circuit 311 may be the CPU of the mainboard 31 and used to implement various functions of the display device.

The signal conversion interface 313 may include a first interface 313a and a second interface 313b. The adaptation circuit 33 may be electrically connected to the signal conversion interface 313. The first interface 313 a may be electrically connected to the processing circuit 311 of the mainboard 31, and the second interface 313b may be electrically connected to the signal transmission interface 312 of the mainboard 31.

The signal transmission interface 312 of the mainboard 31 may be electrically connected to the signal transmission interface 321 of the display panel 32 via the connecting line 34. In embodiments of the present disclosure, the types of the signal transmission interface 312 of the mainboard 31 and the signal transmission interface 321 of the display panel 32 may not be limited. Any type of signal transmission interfaces that are capable of transmitting interaction signals required between the mainboard 31 and the display panel 32 may be applicable. In an example, the signal transmission interface 312 of the mainboard 31 and the signal transmission interface 321 of the display panel 32 may be TCON interfaces. Both of the signal transmission interfaces may be connected via a standard connecting line. Of course, in other examples, the foregoing signal transmission interfaces may also be implemented by other standardized types of interfaces like TCON interfaces, which may not be limited in the present embodiment.

Different from the embodiment shown in the Fig. 3A, in the present embodiment, as shown in Fig. 3B, the signal transmission interface 312 of the mainboard 31 may include a high-speed signal transmission interface 312a and a low-speed signal transmission interface 312b.

The processing circuit 311 of the mainboard 31 may be electrically connected to the high-speed signal transmission interface 312a via a high-speed signal line 316. The processing circuit 311 of the mainboard 31 may be electrically connected to the first interface 313a via a first low-speed signal line 317, and the second interface 313b may be electrically connected to the low-speed signal transmission interface 312b via a second low-speed signal line 318.

The signals transmitted between the mainboard 31 and the display panel 32 may be classified as high-speed signals and low-speed signals based on signal frequency. For example, the high-speed signals may refer to signals whose signal frequencies are greater than a preset threshold, while the low-speed signals may refer to signals whose signal frequencies are less than the preset threshold. The high-speed signal line may be used to transmit high-speed signals. The first low-speed signal line and the second low-speed signal line may be used to transmit low-speed signals. In an example, the high-speed signals may be video signals, including but not limited to V-by-one signal, LVDS and the like; and the low-speed signals may be other signals than video signals, including but not limited to power signal, control signal, state signal, etc.

For a high-speed signal, the processing circuit 311 of the mainboard 31 may transmit the high-speed signal to the display panel 32 directly via the high-speed signal line 316 and the high-speed signal transmission interface 312a. That is, the processing circuit 311 of the mainboard 31 may transmit the high-speed signal to the high-speed signal transmission interface 312a of the mainboard 31 via the high-speed signal line 316, and the high-speed signal transmission interface 312a of the mainboard 31 may transmit the high-speed signal to the display panel 32 via the connecting line 34 and the signal transmission interface 321 of the display panel 32.

For a low-speed signal, it is assumed that the mainboard 31 supports a low-speed signal with a first signal property and the display panel 32 supports a low-speed signal with a second signal property. The process that the mainboard 31 transmits a signal to the display panel 32 may be as follows: the processing circuit 311 of the mainboard 31 transmits a low-speed signal with the first signal property to the adaptation circuit 33 via the first low-speed signal line 317 and the first interface 313a; the adaptation circuit 33 converts the low-speed signal with the first signal property into a low-speed signal with the second signal property; the adaptation circuit 33 transmits the low-speed signal with the second signal property to the low-speed signal transmission interface 312b of the mainboard 31 via the second interface 313b and the second low-speed signal line 318; the low-speed signal transmission interface 312b of the mainboard 31 transmits the low-speed signal with the second signal property to the display panel 32 via the connecting line 34 and the signal transmission interface 321 of the display panel 32. The process that the display panel 32 transmits a signal to the mainboard 31 may be as follows: the display panel 32 transmits a low-speed signal with the second signal property to the low-speed signal transmission interface 312b of the mainboard 31 via the signal transmission interface 321 and the connecting line 34; the low-speed signal transmission interface 312b of the mainboard 31 transmits the low-speed signal with the second signal property to the adaptation circuit 33 via the second low-speed signal line 318 and the second interface 313b; the adaptation circuit 33 converts the low-speed signal with the second signal property into a low-speed signal with the first signal property; the adaptation circuit 33 transmits the low-speed signal with the first signal property to the processing circuit 311 via the first interface 313a and the first low-speed signal line 317.

Alternatively, the signal transmission interface 321 of the display panel 32 may also include a high-speed signal transmission interface and a low-speed signal transmission interface, and the transmission line 34 may accordingly include a high-speed signal transmission line and a low-speed signal transmission line. The high-speed signal transmission interface 312a of the mainboard 31 may be electrically connected to the high-speed signal transmission interface of the display panel 32 via the high-speed signal transmission line and used to transmit high-speed signals; the low-speed signal transmission interface 312b of the mainboard 31 may be electrically connected to the low-speed signal transmission interface of the display panel 32 via the low-speed signal transmission line and used to transmit low-speed signals.

In the embodiment shown in Fig. 3A, the high-speed signals and the low-speed signals are not distinguished, and all the signals may be converted by the adaptation circuit 33. Considering high-speed signals such as video signals, the signal quality of which will be impaired after being converted by the adaptation circuit 33, and pin definitions of the transmission interface of high-speed signals for various panel manufacturers are typically uniform, while pin definitions of the transmission interface of low-speed signals for various panel manufacturers are different. Thus, in the present embodiment, only the low-speed signals may be converted, while the high-speed signals may not be converted to avoid impairing their signal quality.

Alternatively, the adaptation circuit 33 may also include: a first predefined interface and/or a second predefined interface. The first predefined interface may be used to provide information associated with the display panel 32 to the mainboard 31. For example, the first predefined interface may be used to provide the Identity ("ID") of the display panel 32 to the mainboard 31, so as to make the mainboard 31 know the type of the display panel 32 to which it currently adapts and then call a corresponding driver to perform initialization or display operations. The information (e.g., ID) associated with the display panel 32 may be preconfigured into the adaptation circuit 33. The second predefined interface may be used to provide a predefined control signal to the mainboard 31, such as some additional customized control signals. The implementations of the forgoing first predefined interface and the second predefined interface may include but not limited to: a resistance, an Inter-Integrated Circuit ("I2C") interface and a Universal Asynchronous Receiver and Transmitter ("UART") interface. With the foregoing configuration, some auxiliary signals other than common signals may be added to extend and improve the performance of the display device.

In embodiments of the present disclosure, in addition to the panel ID, the information associated with the display panel 32 may also include, but not limited to, information regarding image quality adjustment parameters, Gamma curve, etc.

Alternatively, the adaptation circuit 33 may also include a power conversion circuit, which may be used to provide power to the adaptation circuit 33, for example, by acquiring electrical energy from the mainboard 31 and convert the electrical energy into the power suitable to the adaptation circuit 33.

Moreover, the adaptation circuit 33 may be either a small circuit board or a wire harness, or other implementations. The adaptation circuit 33 may be plugged onto the signal conversion interface of the mainboard 31 via a connector without the need of additional fixing equipments.

Alternatively, the adaptation circuit 33 may be connected to the display panel 32 by a predetermined manner. In embodiments of the present disclosure, the predetermined manner may not be limited. In an example, the adaptation circuit 33 may be connected to the display panel 32 via a flexible line. For example, this flexible line may be a rope. In another example, the adaptation circuit 33 may be connected to the display panel 32 by a fixing component. For example, this fixing component may include a fastener and a screw, so that an end of the fastener may be connected to the adaptation circuit 33 via the screw, while the other end of the fastener may be connected to the display panel 32 via the screw. Of course, other connection ways may also be employed between the adaptation circuit 33 and the display panel 32 to bind them together. With the forgoing design, a fool-proofing design may be provided to ensure that the adaptation circuit 33 can be bound to the display panel 32 after being manufactured, which may avoid a confusion between the adaptation circuit 33 and the display panel 32, and may help to ensure that after-sales maintenance personnel may correctly use an adaptation circuit bound to the display panel when replacing the mainboard or the display panel.

In an example, the display device provided in the embodiments may be a television. Of course, in embodiments of the present disclosure, other implementations of the display device may not be limited, and the display device may be any electronic device with a mainboard and a display panel, such as Personal Computer ("PC") display, Light Emitting Diode ("LED") display, etc.

In summary, in the display device provided in the present embodiment, by additionally providing the signal conversion interface on the mainboard and making the adaptation circuit be electrically connected to the signal conversion interface, signals to be transmitted to the display panel may be converted by the adaptation circuit and then transmitted to the display panel via the signal transmission interface of the mainboard, or signals received from the display panel may be converted by the adaptation circuit and then transmitted to the processing circuit of the mainboard. Therefore, a single mainboard may adapt to various panels, and meanwhile it is unnecessary to provide an additional fixing position to fix an adapter board, only a set of connecting lines may be needed to connect the mainboard and the display panel, and thus the cost may be lower.

Moreover, by dividing the signal transmission interface of the mainboard into the high-speed signal transmission interface and the low-speed signal transmission interface, the processing circuit of the mainboard may be electrically connected to the high-speed signal transmission interface via the high-speed signal line, the processing circuit of the mainboard may be electrically connected to the first interface via the first low-speed signal line, and the second interface may be electrically connected to the low-speed signal transmission interface via the second low-speed signal line. Thus, the high-speed signals and the low-speed signals can be processed separately. For example, only the low-speed signals are converted while the high-speed signals are not converted so as to avoid impairing the signal quality of the high-speed signals.

Moreover, by adding predefined interfaces in the adaptation circuit, some auxiliary signals (e.g., ID of the display panel or additional control signal) other than common signals may be added to extend and improve the performance of the display device.

Moreover, by connecting the adaptation circuit and the display panel with a flexible line, a fool-proofing design may be provided for ensuring that the adaptation circuit can be bound to the display panel after being manufactured.

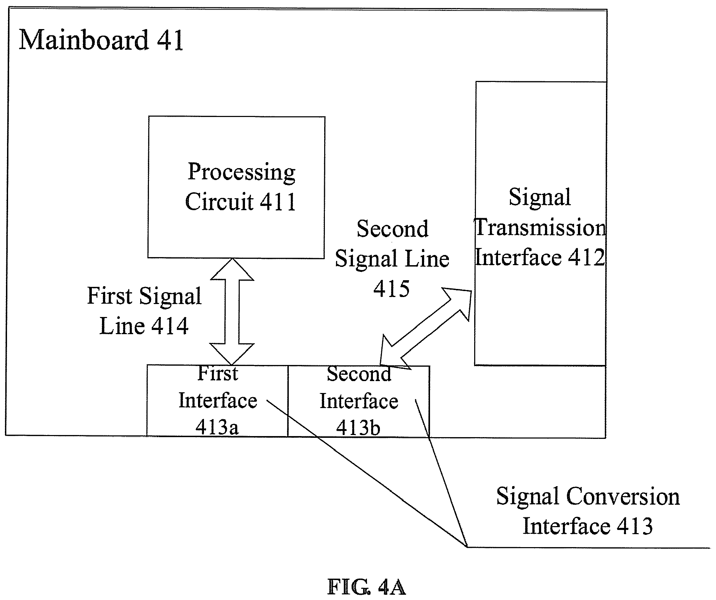

Fig. 4A is a structure schematic diagram of a mainboard applied in a display device according to an exemplary embodiment. As shown in Fig. 4A, the mainbaord 41 may include a processing circuit 411, a signal transmission interface 412 and a signal conversion interface 413. The signal conversion interface 413 may include a first interface 413a and a second interface 413b.

In an example, as shown in Fig. 4A, the processing circuit 411 of the mainboard 41 may be electrically connected to the first interface 413a via a first signal line 414, and the second interface 413b may be electrically connected to the signal transmission interface 412 of the mainboard 41 via a second signal line 415.

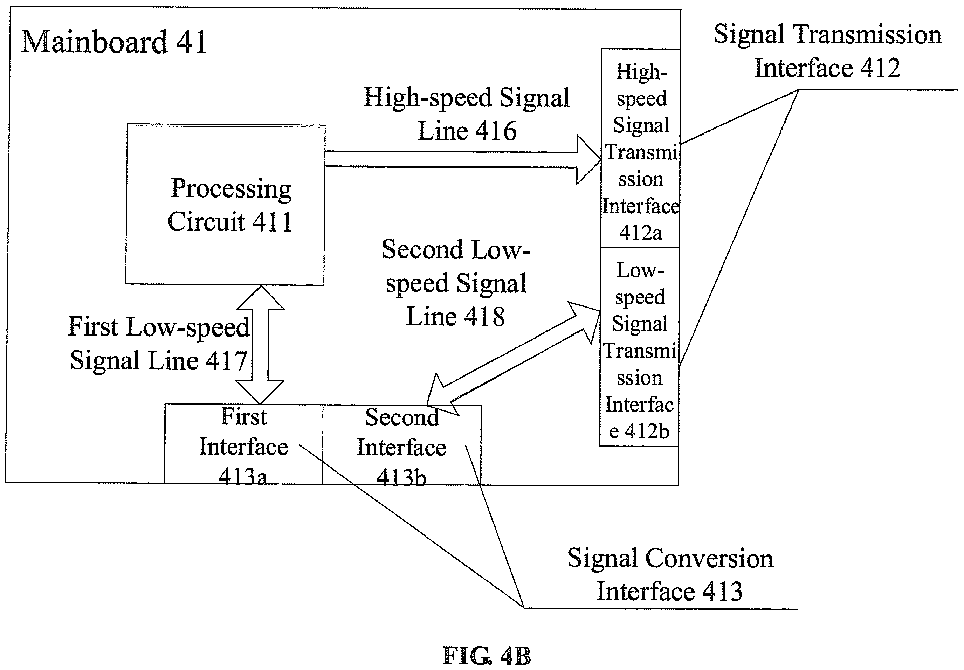

Fig. 4B is a structure schematic diagram of a mainboard applied in a display device illustrated according to an exemplary embodiment. Different from the embodiment shown in Fig. 4A, in the present embodiment, as shown in Fig. 4B, the signal transmission interface 412 of the mainboard 41 may include a high-speed signal transmission interface 412a and a low-speed signal transmission interface 412b. The processing circuit 411 of the mainboard 41 may be electrically connected to the high-speed signal transmission interface 412a via a high-speed signal line 416. The processing circuit 411 of the mainboard 41 may be electrically connected to the first interface 413a via a first low-speed signal line 417, and the second interface 413b may be electrically connected to the low-speed signal transmission interface 412b via a second low-speed signal line 418.

Alternatively, the high-speed signal line 416 may be used to transmit high-speed signals, and the first low-speed signal line 417 and the second low-speed signal line 418 may be used to transmit low-speed signals. In an example, the high-speed signals may be video signals, and the low-speed signals may be other signals than the video signals.

Alternatively, the signal transmission interface 412 of the mainboard 41 may be a TCON interface.

With respect to the details that are not disclosed in the foregoing embodiments regarding the mainboard, reference can be made to the introduction and illustration about the foregoing embodiments regarding the display device, which will not be elaborated herein.

It should be understood that the term "and/or" used herein may describe the relation of associated objects, and may indicate that there may exist three kinds of relations. For example, A and/or B may include the following three cases: only A, both A and B, only B. The character "/" may generally represent an "or" relation between associated objects.

Other embodiments of the present disclosure will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and embodiments be considered as illustrative only, with a true scope of the disclosure being limited only by the appended claims.

It should be understood that the disclosure is not limited to the precise structure as described above and shown in the figures, but can have various modification and alternations without departing from the scope of the disclosure. The scope of the disclosure is limited only by the appended claims.

## Claims

1. A display device, **characterized in that** the display device comprises a mainboard (31), a display panel (32), an adaptation circuit (33) and a connecting line (34), wherein:
the mainboard (31) includes a processing circuit (311), a signal transmission interface (312) and a signal conversion interface (313), wherein the signal conversion interface (313) includes a first interface (313a) and a second interface (313b);
the adaptation circuit (33) is electrically connected to the signal conversion interface (313), the first interface (313a) is electrically connected to the processing circuit (311) of the mainboard (31) and the second interface (313b) is electrically connected to the signal transmission interface (312) of the mainboard (31); and
the signal transmission interface (312) of the mainboard (31) is electrically connected to the signal transmission interface (321) of the display panel (32) via the connecting line (34).

2. The display device of claim 1, wherein the processing circuit (311) of the mainboard (31) is electrically connected to the first interface (313a) via a first signal line (314), and the second interface (313b) is electrically connected to the signal transmission interface (312) of the mainboard (31) via a second signal line (315).

3. The display device of claim 1, wherein the signal transmission interface (312) of the mainboard (31) includes a high-speed signal transmission interface (312a) and a low-speed signal transmission interface (312b);
the processing circuit (311) of the mainboard (31) is electrically connected to the high-speed signal transmission interface (312a) via a high-speed signal line (316); and
the processing circuit (311) of the mainboard (31) is electrically connected to the first interface (313a) via a first low-speed signal line (317), and the second interface (313b) is electrically connected to the low-speed signal transmission interface (312b) via a second low-speed signal line (318).

4. The display device of claim 3, wherein the high-speed signal line (316) is configured to transmit high-speed signals, and the first low-speed signal line (317) and the second low-speed signal line (318) are configured to transmit low-speed signals.

5. The display device of claim 4, wherein the high-speed signals are video signals, and the low-speed signals are other signals than the video signals.

6. The display device of any of claims 1 to 5, wherein the adaptation circuit (33) further includes a first predefined interface and/or a second predefined interface;
the first predefined interface is configured to provide information associated with the display panel (32) to the mainboard (31); and
the second predefined interface is configured to provide a predefined control signal to the mainboard (31).

7. The display device of any of claims 1 to 5, wherein the adaptation circuit (33) further includes: a power conversion circuit.

8. The display device of any of claims 1 to 5, wherein the adaptation circuit (33) is connected to the display panel (32) by a predetermined manner.

9. The display device of any of claims 1 to 5, wherein the adaptation circuit (33) is plugged onto the signal conversion interface (313) of the mainboard (31) via a connector.

10. A mainboard applied in a display device, **characterized in that** the mainboard (41) comprises: a processing circuit (411), a signal transmission interface (412) and a signal conversion interface (413), wherein the signal conversion interface (413) includes a first interface (413a) and a second interface (413b).

11. The mainboard of claim 10, wherein the processing circuit (411) of the mainboard (41) is electrically connected to the first interface (413a) via a first signal line (414), and the second interface (413b) is electrically connected to the signal transmission interface (412) of the mainboard (41) via a second signal line (415).

12. The mainboard of claim 10, wherein the signal transmission interface (412) of the mainboard (41) includes a high-speed signal transmission interface (412a) and a low-speed signal transmission interface (412b);
the processing circuit (411) of the mainboard (41) is electrically connected to the high-speed signal transmission interface (412a) via a high-speed signal line (416);
the processing circuit (411) of the mainboard (41) is electrically connected to the first interface (413a) via a first low-speed signal line (417), and the second interface (413b) is electrically connected to the low-speed signal transmission interface (412b) via a second low-speed signal line (418).

13. The mainboard of claim 12, wherein the high-speed signal line (416) is configured to transmit high-speed signals, and the first low-speed signal line (417) and the second low-speed signal line (418) are configured to transmit low-speed signals.

14. The mainboard of claim 13, wherein the high-speed signals are video signals, and the low-speed signals are other signals than the video signals.
